# EUROPEAN PATENT APPLICATION

(11) **EP 1 130 007 A1**
(43) Date of publication of application: **05.09.2001**
(21) Application number: 00200729.2
(22) Date of filing: 01.03.2000
(51) Int. Cl.: C05D 3/00, A01G 1/04

(54) **Production of substrate for culturing mushrooms**

(71) Applicant: Gebr. Theeuwen Mestfermenteerbedrijf B.V., 5863 AR Blitterswijck (NL)
(72) Inventor: Peters, Alfons Lodewijk Jozef, 4708 LG Roosendaal (NL); Verlinden, Peter Antonius Hendrikus, 5808 BE Oirlo (NL); Vestjens, Theodorus Hendrikus Johannes Josephina, 5231 LJ Den Bosch (NL); Beijers, Wilhelmus Johannes Bartholomeus Anthonius, 5758 AD Neerkant (NL)
(74) Representative: Ottevangers, Sietse Ulbe

(57) **Abstract**

The present invention relates to a process for producing a substrate for culturing mushrooms. The substrate is prepared from horse manure or straw, chicken manure, gypsum and water. These combined components are first converted into compost and then inoculated with spawn (mushroom mycelium). The spawn is pre-cultured before being added to the compost in an amount of at least 1% (wt/wt). The present process is designed such that the time required for producing the substrate, in particular the time required for culturing the inoculated compost, is significantly reduced.

## Description

The invention relates to a process for producing a substrate for culturing mushrooms.

A mushroom is a type of fungus that is produced industrially on a large scale for food consumption. The fungus is cultivated on a specific type of substrate by specialized farmers. The production of the substrate is likewise carried out by a specialized branch of industry. For a general overview of mushroom growing, its history and its practical implications, reference is made to the book "The Cultivation Of Mushrooms", edited by L.J.L.D. van Griensven, Darlington Mushroom Laboratories Ltd., Rustington, Sussex, England, 1988 and "The biology and technology of the cultivated mushroom", ed. by P.B. Flegg, D.M. Spencer and D.A. Wood, John Wiley & Sons, Chichester, UK, 1985.

The production of the substrate, as it is carried out in most current production facilities, comprises four Phases.

The first Phase is generally referred to as Phase 0, because it precedes the actual production of compost. It pertains to the mixing and pretreatment of various components needed, viz. straw-bedded horse manure, wheat straw, chicken manure/gypsum, and process water. It is one of the elegant aspects of the production process that most if not all ingredients used originate from natural sources. The process water employed is typically water that is recycled from various Phases of the production process itself.

Straw is first wetted and the next day it is mixed with said other components. After mixing, a kind of pre-culturing is carried out during which the cell structure of the straw is at least partly impaired thereby enhancing the water uptake. This pre-culturing generally takes about two days.

The second Phase, the so-called Phase 1, pertains to the production of fresh compost. Phase 1 is important to soften the straw and for an optimal conversion of substrate into mushroom fruit body mass. Microbial conversions taking place in the product obtained after Phase 0 give rise to an increase in temperature to about 80°C, which is maintained during an optimized time (typically around five days). Eventually, the product is allowed to cool to ambient temperature, yielding a so-called fresh compost.

Phase 2, following Phase 1, is essentially an aerobic process at 45°C for 6 days after an initial pasteurization of 8 hours at maximally 60°C in order to prevent later outbreak of pests. During Phase 2, the compost is conditioned, becomes selective for the growth of mushroom mycelia, e.g. *Agaricus mycelia,* and made free of ammonia, which is toxic for mushroom mycelia.

Phase 3 follows Phase 2, after inoculation of the Phase 2 compost with mushroom mycelium, the so-called spawn. Spawn, being a monoculture of Agaricus mushroom strains on sterilized grains, viz. from wheat, millet, rye or sorghum origin, is usually delivered by specialised mushroom spawn producers and is universally used by mushroom producers throughout the world. Grain spawn is used as a direct inoculum of bulk Phase 2 substrates. In order to obtain superior yields of high quality mushrooms and to avoid degeneration of the mycelium, it is generally accepted to be very crucial to inoculate every batch of Phase 2 compost with freshly produced spawn, commonly at a spawn rate of 5 to 10 liter milled grain spawn per ton compost (v/w). Phase 3 takes 14-16 days at a temperature of 25-28°C and results in fully grown compost or "spawn-run substrate".

The thus obtained product is the substrate used by mushroom farmers. Actually, the word substrate could be a little misleading as it is not merely the material on which the fungus grows, but also comprises the mushroom mycelium itself. Nevertheless, in the art the product is generally referred to as substrate.

Phase 3 of the above described process is foremost the cost controlling factor. The compost is directly inoculated with the milled grain spawn and it takes a relatively long period of time before the mycelium has fully grown and colonised throughout the compost. Furthermore, the mycelium itself is an expensive raw material, in particular when compared to the other raw materials used in the process. The high prize of the mycelium forms a restraint on increasing the amount used for inoculation of a certain amount of compost. Even worse, as has been reported by J.P.G. Gerrits in 'De Champignoncultuur' 1984, 28 (6), pp. 277-283, increasing the amount of mycelium used for inoculation over 5 liters per ton compost (i.e. 0.5% (vol./wt.) has an adverse effect on the yield of substrate.

The present invention seeks to increase the yield of substrate per time unit. In other words, it is an object of the invention to provide a process for producing a substrate for culturing mushrooms, which process requires less time than the known processes and thus leads to a reduction in costs.

It has been found that the above goal can be reached by pre-culturing the spawn used for inoculating the compost in Phase 3, and by using an increased amount of the spawn for the inoculation. Accordingly, in more detail the invention relates to a process for producing substrate for culturing mushrooms comprising the steps of:
- preparing a mixture of horse manure or straw, chicken manure, gypsum and water;
- converting the mixture into compost by microbial conversion;
- pasteurizing the compost;
- inoculating the compost with spawn; and
- culturing the spawn,
wherein the spawn is subjected to a pre-culturing step and added to the compost in an amount of at least 1% (vol./wt.).

In comparison with the prior art processes, the present process has been found to lead to a much higher yield per time unit. In particular, Phase 3 of the process, the culturing of the inoculated compost, may be performed in a significantly shorter period of time. Furthermore, it is of importance that the protocol of the invention does not adversely affect the quality of the substrate that is produced.

Surprisingly and in contrast with the recommendations of Gerrits, it was found that Phase 3 can be sped up from 14-16 days to 3-11 days, using high spawning rates, viz. 1 to 25% (wt/wt), of spawn-run substrate inoculant. In order to obtain high yields of mushroom at superior quality, it is preferred that for each cycle the spawn-run inoculant substate is freshly prepared from milled grain spawn. Advantages of the invention is that the process time of Phase 3 is shortened considerably and can be optimized e.g. against production planning by the use of optimal spawning rate, lowering costs of raw materials and additives, like spawn, improvement of mushroom quality and improved process control (hygiene, etc.).

As has been mentioned above, the ingredients used for the present process are preferably all from natural sources. Horse manure may be obtained from stables, horse breeding forms and the like and will typically comprise horse faeces, straw, hay, soil, and the like. Straw is the collective name for dried ears and stems of wheat, rye, barley, and the like. Analogous to the horse manure, chicken manure may be obtained from chicken farms and generally comprises chicken faeces, straw, hay, soil, food remnants and the like. The term gypsum generally refers to calcium sulfate, which can be obtained as a side product of a lactic acid production process. The water used is preferably process water, i.e. recycled water from the present or another process.

As the compositions of the different ingredients used will vary over time, it is one of the skills of the artisan to adjust the relative amounts of the ingredients so that a constant quality of product is obtained. According to the invention, these amounts, apart from the amount of spawn used, will essentially be chosen the same as in conventional processes. Typically, when the mixture is based on horse manure/straw without added straw, the mixture will contain on dry weight 75-85% horse manure, 13% chicken manure and 5% gypsum. When no horse manure is used, a typical recipe based on dry weight is 60-65% straw, 30-35% chicken manure and 3-6% gypsum. These percentages are based on the dry weight (solids) of the mixture. In both cases water should be present to obtain an overall moisture content of 70-80%.

In order to prepare the objective mixture of the above ingredients, preferably the straw is first wetted with a little water. Subsequently, the other ingredients are added and the mixture is preferably homogenized. In a preferred embodiment, the mixture is subjected to a pre-fermentation in order to impair the cell structure of the straw thereby enhancing the capacity of the mixture to take up water. This pre-fermentation will generally last 1 to 3 days.

The thus obtained mixture is converted to compost by microbial conversion. This conversion is accomplished by simply increasing the temperature of the mixture, as a result of which the micro-organisms present in the mixture convert it into compost. Preferably, this conversion is carried out at a temperature of between 60 and 100°C, more preferably between 70 and 90°C, even more preferably between 75 and 80°C. Generally, the conversion will take from 3 to 7 days. In a preferred embodiment, after microbial conversion has taken place to a sufficient extent, the mixture is allowed to cool to ambient temperature.

In order to terminate the microbial conversion and to avoid contamination of the mushroom mycelium with other micro-organisms or other organisms, the compost is pasteurized before inoculation with spawn. The pasteurization preferably occurs at a temperature between 50 and 60°C and lasts for approximately 3 to 6 days. In a preferred embodiment, the compost is kept at a temperature of 44-47°C for a period of 4-6 days after pasteurization in order to remove any ammonia present.

The pasteurized compost is ready for inoculation with spawn. In principle, any strain of fungus that is capable of producing edible mushrooms may be used in accordance with the invention. An overview of suitable strains, most of which are commercially available, may be found in Chapter 4, by G. Fritsche, of the book "The Cultivation Of Mushrooms", edited by L.J.L.D. van Griensven, Darlington Mushroom Laboratories Ltd., Rustington, Sussex, England, 1988. Preferred examples are *Agaricus bisporus*, *Agaricus bitorquis, Lentinus edodes, Coriolus versicolor, Pleurotis* species. Typical *Agaricus bisporus* strains are deposited under CBS 571.66, CBS 505.73 CBS 506.73, CBS 752.79, CBS 753.79, ATCC 24662 and ATCC 24663. In order to exclude the chances of regeneration of the spawn, it is preferred that fresh spawn is used for every batch of substrate that is produced.

It is an important aspect of the invention, that the spawn is first subjected to a pre-culturing step. The commercially available spawns essentially all contain the fungus strain on a wheat substrate. In accordance with the present invention, the pre-culturing step is preferably carried out by inoculating a small batch of compost with the spawn. The compost used for this purpose is preferably the same compost as described above, i.e. the compost used for producing the substrate for culturing mushrooms, although not necessarily of the same batch. In this pre-culturing step, the amount of spawn used typically lies below 1% (vol./wt.), and preferably between 0.5 and 1% (vol./wt.).

The pre-culturing will generally require a time period of between 11 to 17 days, preferably 14-17 days. It will be understood that one batch of pre-cultured spawn may be used for the production of several batches of substrate. The amount of compost used in the pre-culturing may conveniently be adjusted to the amounts and number of batches of substrate that will be produced.

The pre-culturing may be carried out at normal spawning conditions. Typically, these conditions involve a moisture of 68-71%, a nitrogen content of 2 to 2.4%, a pH of 7 to 7,5, an ammonium content of less than 3 ppm, a compost temperature below 30°C, preferably 26-28°C, an air temperature of 19-23°C , a carbon dioxide content of 2200-20.000 ppm under anaerobic conditions and a relative air humidity of more than 90%.

The pre-cultured spawn is used for inoculation of the compost that is to be converted to substrate. The dosage used is substantially higher than the conventional dosages. In contrast to what has been reported in the literature (see above), it has been found that the time required for completing Phase 3 of the process may significantly reduced by using a higher dosage of spawn in accordance with the invention. The amount in which the spawn is added to the compost is at least 1% (vol./wt.), preferably at least 2% (vol./wt.), more preferably between 6 and 15% (vol./wt.).

This amount can conveniently be adjusted to achieve a desired process time for the culturing, thereby enabling a highly efficient management of the entire process.

After inoculation, the compost may be cultured under conventional conditions to produce the objective substrate. As has been said before, it is an important advantage of the invention that the time required for this Phase is significantly reduced. In accordance with the invention, culturing over a period of 3 to 10 days may be sufficient. During this period, the mycelium reproduces itself and becomes distributed over the entire batch of compost. Consequently, a substrate is produced which may processed immediately by a mushroom farmer.

In accordance with the invention, the steps of pasteurizing, inoculating and culturing, including pre-culturing, are preferably carried out in bulk solid-state fermentation rooms called "tunnels". These tunnels are known per se, e.g. from J.P.G. Gerrits, "Composting for high yield and quality" in Mushroom World, 7(3), (1996), pp. 33-45, the contents of which are incorporated herein by reference. They generally have a floor area of about 100 m² to fill compost at 2 m height or 1 ton/m². Air is forced upwards through the substrate or compost to ensure aerobic conditions and to control temperature. Fermentation processing in tunnels allows an adequate and hygienic process control and ensures containment of process air and thus the opportunity to clean this air of ammonia and odour.

The invention will now be further elucidated by the following, non-restrictive examples.

### Example 1

Spawn on compost was produced in a pre-culturing step. This step was carried out in 15 days at 25°C under anaerobic conditions and at saturated humidity in a tunnel as described by J.P.G. Gerrits, Mushroom World 7(3), (1996), pp. 33-45, starting from Phase 2 compost, being freshly inoculated with 8 liter Sylvan Somycel 512 spawn per ton Phase 2 compost.

For the production of a substrate for culturing mushrooms, Phase 2 compost was inoculated with the thus obtained pre-cultured spawn at various inoculation degrees. The pre-cultured spawn was thoroughly mixed with the compost at a temperature of 19°C. After culturing at 19°C in the above tunnel under conventional conditions, the compost was fully colonized and the spawn-run compost was harvested and used for mushroom cropping following a standard procedure. It was found that the mushrooms were of very high quality in every instance.

The following table shows the inoculation degrees and culturing times tested.

| Inoculation degree (wt.%) | Culturing time (days) |
|---|---|
| 1 | 15 |
| 2 | 10 |
| 5 | 8 |
| 10 | 6 |

### Comparative Example

For the production of a substrate for culturing mushrooms, Phase 2 compost was inoculated with 7 liter Sylvan Somycel 512 spawn ("grain spawn") per ton Phase 2 compost. The pre-cultured spawn was thoroughly mixed with the compost at a temperature of 19°C. After culturing at 19°C in the tunnel specified in Example 1 for 13 days under conventional conditions, the compost was fully colonized and the spawn-run compost was harvested.and used for mushroom cropping following a standard procedure. It was found that the mushrooms were of very high quality.

### Example 2

The procedure outlined in Example 1 was repeated, except that the culturing was carried out in a box containing 100 kg of compost. The box has a size of 1.20 m long, 1.75 m wide, and 0.35 m high. The compost layer in the box had a height of 24 cm. During culturing, the boxes were placed in climate controlled cells of relative humidity 100%, with circulation and 10% ventilation. The inoculation degree was 2%, and the culturing time was 6 days. Again, mushrooms of very high quality were obtained.

## Claims

1. Process for producing substrate for culturing mushrooms comprising the steps of:
- preparing a mixture of horse manure or straw, chicken manure, gypsum and water;
- converting the mixture into compost by microbial conversion;
- pasteurizing the compost;
- inoculating the compost with spawn; and
- culturing the spawn,
wherein the spawn is subjected to a pre-culturing step and added to the compost in an amount of at least 1% (wt/wt.).

2. Process according to claim 1, wherein the mixture comprises, based on dry weight, from 75 to 85 wt.% of horse manure, from 10 to 15 wt.% of chicken manure, and from 3 to 8 wt.% of gypsum.

3. Process according to claim 1, wherein the mixture comprises, based on dry weight, from 60 to 65 wt.% of straw, from 30 to 35 wt.% of chicken manure, and from 3 to 6 wt.% of gypsum.

4. Process according to claim 2 or 3, wherein the moisture content of the mixture is between 70 and 80%.

5. Process according to claims 1-4, wherein the microbial conversion is carried out a temperature between 60 and 100°C.

6. Process according to any of the preceding claims, wherein the compost is allowed to cool to ambient temperature before pasteurization.

7. Process according to any of the preceding claims, wherein the pasteurization is carried out at a temperature between 50 and 60°C.

8. Process according to claim 7, wherein the pasteurized compost is cooled to 40-45°C for 4-6 days and then to 20-30°C, preferably to 25-28°C.

9. Process according to any of the preceding claims, wherein the spawn is *Agaricus bisporus*, *Agaricus bitorquis, Lentinus edodes*, *Coriolus versicolor, Pleurotis* species.

10. Process according to any of the preceding claims, wherein the spawn is pre-cultured on a compost as defined in the previous claims.

11. Process according to any of the preceding claims, wherein the spawn is pre-cultured under normal spawn-running conditions.

12. Process according to any of the preceding claims, wherein the compost is inoculated with between 1 and 25%, preferably between 6 and 15% (vol./wt.) of spawn.

13. Process according to any of the preceding claims, wherein the culturing of spawn is carried out in a time period of between 3 and 10 days to produce the substrate.
